(19) Europäisches Patentamt
European Patent Office
Office européen des brevets

(11) Publication number: 0 211 237 B1

(12) # EUROPEAN PATENT SPECIFICATION

(45) Date of publication of the patent specification: 02.05.90

(51) Int. Cl.⁴: G11B 23/50, G11B 15/60

(21) Application number: 86109026.4

(22) Date of filing: 02.07.86

(54) **Process for lubricating accessories of cassettes containing magnetic tapes.**

(30) Priority: 03.07.85 IT 2141785

(43) Date of publication of application: 25.02.87 Bulletin 87/9

(45) Publication of the grant of the patent: 02.05.90 Bulletin 90/18

(84) Designated Contracting States: BE DE FR GB NL SE

(56) References cited:
EP-A- 0 008 777
EP-A- 0 136 102
DE-A- 1 593 749
US-A- 3 214 478
US-A- 3 778 308
US-A- 4 174 461

PATENT ABSTRACTS OF JAPAN, vol. 8, no. 228 (P-308)[1665], 19th October 1984; & JP - A - 59 107 470 (MATSUSHITA) 21-06-1984 (Cat. A)
PATENT ABSTRACTS OF JAPAN, vol. 6, no. 255 (P-162)[1133], 14th December 1982; & JP - A - 57 150 164 (HITACHI MAXELL K.K.) 16-09-1982

(73) Proprietor: AUSIMONT S.r.l., 31, Foro Buonaparte, I-20100 Milano(IT)

(72) Inventor: Scarati, Mario Alberto, 20, via Bronzino, I-20133 Milan(IT)
Inventor: Tognoni, Carlo, 9, piazzale Siena, I-20146 Milan(IT)
Inventor: Giunti, Piero, 27, via Famiglia Seriini, 25035 Ospitaletto, Brescia(IT)
Inventor: Salvioli, Luigi, 30, via de Vitali, I-25126 Brescia(IT)
Inventor: Sigismondi, Gian Maria, 15, via Matteotti, I-25030 Roncadelle Brescia(IT)

(74) Representative: Weinhold, Peter, Dr. et al, Patentanwälte Dipl.-Ing. G. Dannenberg Dr. P. Weinhold Dr. D. Gudel Dipl.-Ing. S. Schubert Dr. P. Barz Siegfriedstrasse 8, D-8000 München 40(DE)

EP 0 211 237 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

BACKGROUND OF THE INVENTION

1. Field of the Invention

The present invention relates to the use of fluids for lubricating accessory elements which magnetic tapes come into contact with, during their operation, in the devices containing them.

In particular, this invention relates to the use of lubricants based on perfluoropolyethers in order to reduce the friction and/or wear phenomena which the magnetic tapes are subjected to owing to the contact with the accessory elements of the cassettes in which the magnetic tapes are contained.

Said friction problems arise in any device using magnetic tapes, however for the sake of simplicity, the audio or video cassettes will be discussed in particular.

It is understood, however, that the use of the perfluoropolyethers which is the object of the present invention can be extended to any device which includes magnetic tape cassettes, such as, for example, magnetic tapes for computers or typewriters.

2. The Prior Art

As is known, the audio cassettes consist, for example, of an outer casing of plastic material which consists of two flat halves which fit into each other and are fixed by means of screws. Inside the halves there are two horizontally arranged reels around which the magnetic means winds.

The recording occurs on the tape portion having access to the outside which is made possible by proper guides and by a window in the cassette edge.

While the device is in operation, the reels are not axially constrained but are simply caused to rotate by the corresponding pins, so that the tape edge slides against the plastic casing and is subjected to considerable wear and friction phenomena.

During operation, furthermore, the tape comes into contact with other metallic or non-metallic accessory elements which have the function of guiding the tape so that it can wind around the respective reels.

To reduce the rubbing of the tape against the plastic casing of the cassette it is known to interpose between the two parts of plastic material which form the cassette and the reels two sliding sheets which are called liners, are generally self-lubricating and are obtained by means of punching from a sheet of plastic material.

The plastic material generally used is based on polyesters, such as e.g. polyethyleneterephthalate.

The interposition of the liners however is accompanied by the drawback of leading to an accumulation of electrostatic charges by triboelectric effect during the operation of the device with consequent increase of friction which results in a deterioration of the recording qualitites or jamming of the tape and also, in some cases, breaking of the tape.

To overcome these drawbacks it is known to coat the liner surface with a layer of a material containing dispersed graphite. This process consists of depositing on the liner, according to known techniques, a suspension of graphite particles in a suitable binder, generally vinyl resins dissolved in proper solvents. This method is known in the art as graphitized coating.

The graphitized coating is affected however by the drawback of being subjected to progressive wear and flaking during tape operation due to friction. Furthermore this method is very expensive as it requires highly sophisticated techniques to obtain very uniform graphite coatings on the liner.

A further complication arising in this method is achieving a good adhesion of the graphitized coating to the plastic substrate.

It is also known to use lubricants of the class of polyalcohols; these fluids however do not possess good lubricating properties and have a low stability to chemical agents and to oxidation, which limits the performance constancy over rather long periods of time.

From JP-A 150 164 lubrication layers made of either fluoride or fluoride, alkoxysilane and silane fluoride are known.

In JP-A 107 470 polytetrafluoroethylene (PTFE) has been described as a lubricant.

Liners based on graphite-filled polytetrafluoroethylene are known as well. In this case, however, it should be taken into consideration that the liners based on PTFE are very difficult to prepare with the dimensional parameters required for their application in audio cassettes. In fact, PTFE is very difficult to produce in extremely thin films, and this strongly reduces the utilization thereof, as the use of layers of greater dimensions results in too high costs which are not compatible with these uses.

PTFE, though theoretically being a material suited to reduce the friction phenomena, is in practice not used because of the above-mentioned drawbacks.

In addition, the sliding on the accessories acting as a guide for the winding of the tape around the reels during the magnetic tape operation is a further cause of wear and friction.

The sliding phenomenon on accessory elements of the cassette containing the magnetic tape is actually the only cause of friction and wear in the video cassettes, where no sliding sheets are used. In fact, video cassettes consist of two halves of plastic material and are free of liners, as the magnetic tape is

wound on two reels equipped with flanges, and in order to permit access to the tape from the outside the tape is made to pass on two metal cylinders, generally made of stainless steel, and is kept under tension by a proper tab of plastic material which presses the tape.

As one of the main characteristics of the coating of the tape accessory parts is the constancy of their performance over a very long period of time, there was great need to find a material capable of reducing to the best possible extent the friction and wear phenomena as well as the triboelectric effect described hereinbefore.

THE PRESENT INVENTION

It has now surprisingly been found that it is possible to overcome the cited drawbacks by using as a lubricating fluid a fluid based on perfluoropolyethers applied to the surface of the liners or of all the accessory elements of the devices necessary for the operation of the magnetic tapes contained in cassettes.

These lubricants offer the advantage of enormously reducing the interface friction and wear between tape and liner or between liner and accessory elements, and furthermore they do not involve the difficulty of obtaining uniform and extremely thin coatings as in the case of the graphitized coatings; moreover, they are easy to apply on the plastic liner or on the accessory elements of the cassettes.

In addition to the foregoing, the perfluoropolyethereal compounds are endowed with a high stability to chemical agents and to oxidation, which imparts to the coating the capability of providing a constant and permanent performance.

The perfluoropolyethers which are used for the purposes of the invention are selected from the following classes of compounds A1 to A8 comprising the constitutive units of the types listed below:

A1) $(C_3F_6O)$ and $(CFXO)$ statistically distributed along the perfluoropolyether chain, where X is $-F$, $-CF_3$;

A2) $(C_3F_6O)$;

A3) $(C_3F_6O)$, $(C_2F_4O)$, $(CFXO)$, statistically distributed along the perfluoropolyether chain, where X is $-F$, $-CF_3$;

A4) $(C_2F_4O)$, $(CF_2O)$, statistically distributed along the perfluoropolyether chain;

A5) $(C_3F_6O)$, this class furthermore comprising the characteristic group $-CF(CF_3)-CF(CF_3)-$;

A6) an oxetane ring of the general formula selected from

(1) 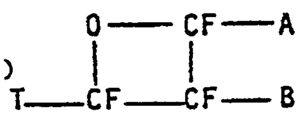 ; 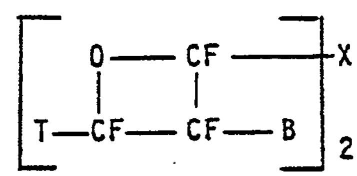 (2) ;

in which a least one of the groups linked to the ring contains an ethereal oxygen atom, and where A is F, a perfluoroalkyl radical having 1 to 8 carbon atoms, a group

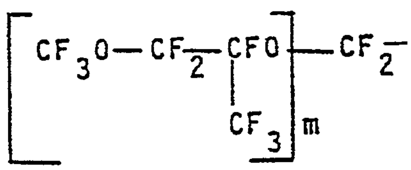

in which m is an integer from 0 to 5 inclusive, or a group

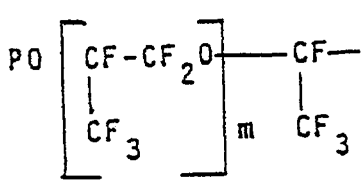

in which P is a perfluoroalkyl radical having 1 to 8 carbon atoms and m is as defined above;
B and T, which may be the same or different, are:
F, a perfluoroalkyl radical having 1 to 7 carbon atoms, or a group

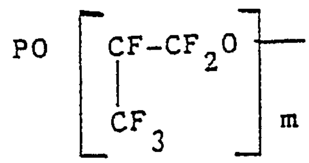

in which m and P are defined as above, X is equal to $-CF_2O-(CF_2O)p-(C_2F_4O)_q-CF_2-$, in which p and q, which may be the same or different, are integers from 0 to 5 inclusive, and where the sum p+q is at least equal to 1, or a group $-(CF_2)_r-$, in which r is an integer from 1 to 8;
or an oxetane ring of the general formula selected from

(3) 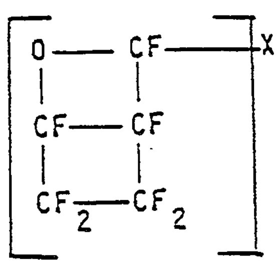 ; (4) 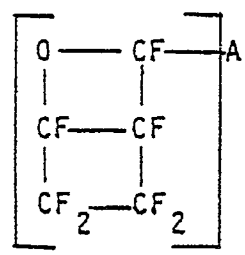

in which the group linked to the ring contains at least one ethereal oxygen atom, and A and X being defined above;

A7) $(CD_2CF_2CF_2O)$, where D is H or F;

A8) $(CF_2CF_2O)$.

The perfluoropolyethers, regardless to which of the above-mentioned classes they may belong, have a viscosity range from 10 to 1500 mm²/s (cSt), in particular from 60 to 250 mm²/s (cSt) (at 20°C).

The perfluoropolyethers employable in the present invention in particular are selected from those belonging to the following perfluoropolyether classes:

A1) $R_fO(C_3F_6O)_m(CFXO)_nR_f$, in which $R_f$ is $-CF_3$, $-C_2F_5$, $-C_3F_7$; X is $-F$, $-CF_3$; m and n are integers, and the m/n ratio ranges from 5 to 40 when n is different from 0. These compounds are prepared according to the process described in GB patent No. 1 104 482 and by means of subsequent neutralization reaction, as described below for class A4);

A2) $C_3F_7O(C_3F_6O)_m-R_f$; where $R_f$ may be $-C_2F_5$, $-C_3F_7$, $-CFHCF_3$; and m is a positive integer. These compounds are prepared according to US patent 3 242 218;

A3) $CF_3O(C_3F_6O)_m(C_2F_4O)_n(CFXO)_q-CF_3$; where X is $-F$, $-CF_3$; m, n and q are integers, and n and q may also be 0; the ratio

$$\frac{m}{n+q}$$

ranges from 0 to 50, n/q ranges from 0 to 10, n+q and q respectively being different from 0. These products are obtained by photooxidation of mixtures of $C_3F_6$ and $C_2F_4$ and subsequent neutralization with fluorine according to the process described in US patent 3 665 041;

A4) $CF_3O(C_2F_4O)_p(CF_2O)_q-CF_3$; where p and q are the same or different integers and which may also be 0, where the p/q ratio ranges from 0.5 to 1.5. These perfluoroethers are prepared according to US patent 3 715 378 and subsequently neutralized with fluorine according to US patent 3 665 041;

A5) $$\left[C_3F_7O(C_3F_6O)_m-CF(CF_3)-\right]_2$$ ;

where m is a positive integer.

These products are obtained by ionic telomerization of the hexafluoropropene epoxide and subsequent photochemical dimerization of the acid fluoride according to processes described in US patent 3 214 478;

A6)

(1) 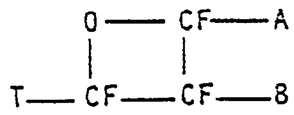 ; (2) 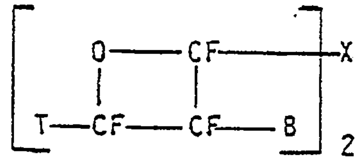 ;

(3) 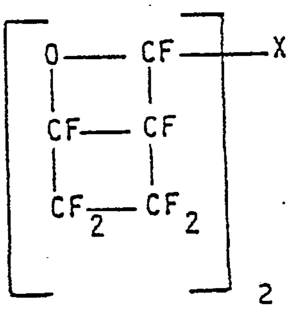 ; (4) 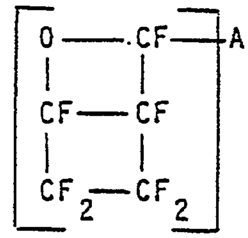 ;

where A, B, T and X are defined as above; and characterized in that at least one of the groups A, B and T in class 1), or B, T and X in class 2) contains one or more ethereal oxygen atoms, and in classes 3) and 4) the groups X and A are selected from the above-mentioned radicals containing ethereal oxygen atoms; and furthermore characterized in that, when one of the radicals B or T is equal to the group

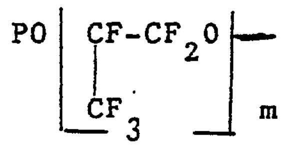

the other radical is equal to F. Said perfluoroethers are prepared by cycloaddition reactions between a fluoride of a perfluorinated acid and a perfluoroolefin in which at least one of the compounds contains an ethereal oxygen atom according to what is described in an earlier patent application filed by the Applicant hereof;

A7) $R_fO(CD_2CF_2CF_2O)_nR'_f$; where $R_f$ and $R'_f$, which may be the same or different, are fluorinated alkyl radicals; D is H or F, and n is a positive integer. Said perfluorpolyethers are prepared according to European Patent Application 148 482;

A8) $R_fO(CF_2CF_2O)_mR'_f$; where $R_f$ and $R'_f$, which may be the same or different, are $-CF_3$, $-C_2F_5$, and m is a positive integer. Said perfluoropolyethers are prepared according to US patent 4 523 039.

Besides the neutral perfluoropolyethers it is also possible to use perfluoropolyethers having functional groups at one or both ends.

Compounds I) and II), indicated hereinafter, respectively fall within the above-specified classes A1) and A3).

I) $RO-(C_3F_6O)_m(CFXO)_n-CFX-L$, or

II) $R''CFXO-(C_3F_6O)_x(CFXO)_y-(C_2F_4O)_z-CFX-L$, where

$R = -CF_3, -C_2F_5, -C_3F_7$

$X = -F, -CF_3$

$R'' = -F, -CF_3, -C_2F_5$

m = an integer other than zero,

n = an integer or zero, and when n is different from zero m/n varies from 5 to 20 and R is preferably = $-CF_3$, if n = zero, R is preferably $-C_2F_5$ or $-C_3F_7$;

x = an integer or zero;

y, z = integers, and

$$\frac{x+z}{y}$$

ranges from 5 to 0.5, y being different from zero, provided that, when x = zero, z/y ranges from 1 to 0.5, while X is preferably –F, and R″ = L;

L = group Y–Z, where

$Y = -CH_2O-, -CH_2OCH_2-, -CF_2-, -CF_2O-$;

Z = a non-aromatic, non-fluorinated organic radical free from active hydrogen atoms, containing two or

more identical or different heteroatoms, donors of electron doublets, or an aromatic radical, either or not containing heteroatoms, capable of forming coordinate bonds or charge-transfer bonds, thus causing various kinds of absorption phenomena on surfaces of metal, polymeric or ceramic materials.

These perfluoropolyethers containing functionalities are prepared as described in IT patent applications Nos. 21 480 A/84 and 21 481 A/84 in the name of Applicant.

Also difunctional perfluoropolyethers like the ones described in US patent 4 094 911 and US patent 4 085 137 (Mitsch) can be employed with advantage.

As compounds of class A4) one may also use perfluoropolyethers comprising, besides the units $C_2F_4O$ and $CF_2O$, also units $(CF_2CF_2CF_2O)$ and $(CF_2CF_2CF_2CF_2O)$, as described in the article "Perfluoropolyethers by Photooxidation of Fluoroolefins" by D. Sianesi, A. Pasetti, R. Fontanelli, G. C. Bernardi and G. Caporiccio – La Chimica e l'Industria, February 1973, pages 216–220.

Besides the copolymers containing the above-indicated units it is possible to also use only or prevailingly homopolymers comprising the abovesaid units $(CF_2)_3O$ or $(CF_2)_4O$.

The neutral perfluoropolyethers of the indicated classes are preferably employed in the audio cassettes which generally do not contain metallic accessory elements; in video cassettes the above-cited perfluoropolyethers containing functional groups are preferred because they exhibit a better adhesion to metals.

The deposition techniques suitable for the liners of audio cassettes are for example the coating by spraying or immersion or by rubbing with a soaked pad, starting from dilute solutions of perfluoropolyethereal oils in 1,1,2-trichlorotrifluoro ethane, in the case of applications onto already punched plates or the continuous coating by means of spraying techniques or the application by means of extrusion head or gavure roll coating of the plastic film tape to be punched.

With video cassettes the application of the lubricant to the sliding cylinders and to the tension tab can be accomplished preferably by immersion or rubbing.

The lubricant thicknesses useful in said application are in the range from 5 to 2000 nm (50 to 20,000 Å) and preferably from 10 to 1000 nm (100 to 10,000 Å).

The concentrations of the solutions useful to obtain said thicknesses are in the range from 0.1 to 10% of perfluoropolyethereal oil in 1,1,2-trichlorotrifluoroethane, and preferably from 0.2 to 5% by weight.

The perfluoropolyethers according to the invention, when used as lubricants in video cassettes, prove to be particularly effective with respect to a reduction of friction, also during the fast-winding steps of the tape.

The following examples are merely given to illustrate the present invention without being, however, a limitation thereof.

Example 1

To check the friction properties of the various lubricating materials and to make a comparison to the technologies used at present, a comparative measurement of the tape friction against the liner during the unwinding and the fast rewinding of the cassette was carried out.

There were tested small plates made of PET (polyethylene terephthalate) in one case (case A in table I) in the absence of coating or lubricating layer, and in another case (case B in table I) in the presence of a graphitized coating limited to two parallel bands in which the contact area with the reel side is the greatest; in a third case (case C in table I) the plate was coated with perfluoropolyether, commercially known as Fomblin Y 06 ($\eta$ = 60 mm²/s (cSt) at 20°C).

The application method used to prepare the lubricated plates was the following: the plate was uniformly rubbed with a pad soaked with a 10% by weight solution of perfluoropolyethereal oil dissolved in 1,1,2-trichlorofluoroethane.

The thickness of the resulting film was in the order of 500 nm (5000 Å); the thus lubricated plate was then again introduced into the cassette.

To carry out the test a usual commercial recorder was used, the friction (during the FAST FORWARD or REWIND operations) having been evaluated by measuring the absorbed current. The data relating to the rewind operation are reported in table I.

In consideration of the different diameters of the reels in the various steps of the rewind process the current absorption at the beginning, at half, and at the end of the operation was measured, and the results obtained under the same conditions were compared.

Example 2

In order to test the behaviour of the interface between tape and lubricated plate, linear friction coefficient tests according to ASTM method 1984 73 (DIN 53 375) were performed.

The apparatus used for this purpose consisted of a platform coated with one of the two materials forming the kinematic couple (in the present case the material forming the liner).

The other component consisted of the tape reel horizontally resting on the liners.

The tangential stress was detected through a loading cell and was graphically recorded, after proper signal conditioning, by a potentiometric recorder as a function of time.

From the resulting graph there were calculated the friction coefficient values resulting from the ratio between tangential stress and normal stress.

For this example there were used PET liners lubricated with perfluoropolyethereal oils commercially known as Fomblin Z 25 ($\eta$ = 250 $mm^2/s$ (cSt) at 20°C).

The results obtained, expressed in terms of static and dynamic friction coefficients, are reported in table II.

Example 3

To verify the validity of the technological choice based on the liner lubrication a mechanical torque measurement of audio cassettes was effected by means of an apparatus "Information Terminals M400 Cassette Tester". Such measurements are generally made by manufacturers of audio cassettes for the production quality control; the instrument substantially measures the current absorbed by the motor which keeps the tape rotating and permits the reading of the mechanical torque (in g*cm). According to quality control practice the readings are made at the beginning and at the end of the tape rewinding.

Table III shows the experimental results obtained by using, as lubricants for the liners, perfluoropolyethereal oils commercially known as Fomblin Z 25 ($\eta$ = 250 $mm^2/s$ (cSt) at 20°C). From a comparison of the data it is apparent that an improvement of the mechanical performance of the audio cassettes occurs when the perfluoropolyether of the present invention is used.

From the results obtained it is possible to infer that the liners treated with perfluoropolyethereal oil – besides meeting, as regards the mechanical properties, the specifications determined long ago by Philips, i.e. generally a starting torque of 8 g*cm and a final torque of 20 g*cm – permit a more uniform sliding of the tape inside the halves, compared to the graphite-coated liners, either those made of PET or of PTFE.

Example 4

The sliding steel cylinders and the tension tab of a commercial-type video cassette were lubricated. Lubrication was done by immersing said parts, taken from the cassette, into a 1% solution of perfluoropolyether having functional groups at both ends and belonging to class II) in which X = O, Y = $CH_2OCH_2$, R″ = L and

Z = 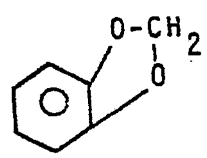

in 1,1,2-trichlorotrifluoroethane.

The lubricated parts were then again placed "in situ", and a mechanical test was carried out with the thus modified cassette by using, as a comparison, an untreated cassette belonging to the same production lot.

The tractive force required to make the tape slide (measured by means of a dynamometer) was 10 g in the lubricated cassette instead of 15 to 18 g necessary for the comparison tape. The values obtained are the average of five tests.

With the same cassettes electromagnetic tests were performed (still frame, counting of dropouts, chromanoise, luminance to noise ratio) which did not reveal any deterioration of the tape properties as a consequence to lubrication.

In the proposed application, however, the lubricant was not in contact with the magnetic coating of the tape but only with the top surface of the plastic substrate.

Table I

| Case | Current absorption (mA); rewind step | | |
|---|---|---|---|
| | Beginning | Half | End |
| A | 90 | 105 | 185 |
| B | 95 | 87 | 187 |
| C | 80 | 95 | 160 |

Table II

| Description | friction coefficient static | friction coefficient dynamic |
|---|---|---|
| liner lubricated with Fomblin Z 25 (series shaped) ** | 0.20 | 0.12 |
| graphitized liner (manually shaped)* | 0.33 | 0.29 |
| graphitized liner (series shaped)** | 0.41 | 0.26 |
| PTFE liner filled with graphite | 0.29 | 0.20 |

* manually shaped means that the liner was manually adapted in order to reduce the contact area between reel and liner to the minimum.

** series shaped means the use of commercial-type liners

Table III

| Description | | starting torque (g*cm) | final torque (g*cm) |
|---|---|---|---|
| cassette with wide window; graphite-filled PTFE liner | side 1 | 6 | 16 |
| | side 2 | 6 | 14 |
| cassette with wide window; band-graphitized liner | side 1 | 8 | 12 |
| | side 2 | 4 | 12 |
| cassette with wide window; liner lubricacted with Fomblin Z 25 | side 1 | 3.5 | 13 |
| | side 2 | 3.5 | 8 |
| cassette with narrow window; PET liner lubricated with Fomblin Z 25 | side 1 | 2.5 | 8 |
| | side 2 | 3.0 | 10 |
| cassette with wide window; PET liner lubricated with Fomblin Z 25 | side 1 | 3.5 | 9 |
| | side 2 | 5.0 | 13 |

**Claims**

1. A process for protecting magnetic tapes from the frictcn and wear caused by the metallic or non-metallic accessory elements which constitute the cassette, during their operation, characterized in that said accessory elements are lubricated with a perfluoropolyethereal fluid having a viscosity ranging from 10 to 1500 $mm^2/s$ (cSt) at 20°C and being selected from the classes of compounds A1 to A8 comprising the constitutive units of the types listed hereinbelow:

A1) ($C_3F_6O$) and (CFXO) statistically distributed along the perfluoropolyether chain, where X is –F, –$CF_3$;
A2) ($C_3F_6O$);
A3) ($C_3F_6O$), ($C_2F_4O$), (CFXO), statistically distributed along the perfluoropolyether chain, where X is –F, –$CF_3$;
A4) ($C_2F_4O$), ($CF_2O$), statistically distributed along the perfluoropolyether chain;
A5) ($C_3F_6O$), this class furthermore comprising the characteristic group –$CF(CF_3)$–$CF(CF_3)$–;
A6) an oxetane ring of the general formula selected from

(1) 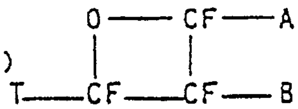 ;

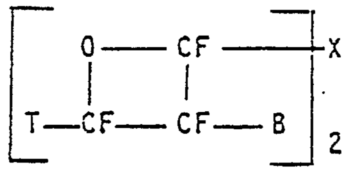 (2) ;

in which at least one of the groups linked to the ring contains an ethereal oxygen atom; and in any case at least one of the groups does not contain ethereal oxygen atoms, and where A is F, a perfluoroalkyl radical having 1 to 8 carbon atoms, a group

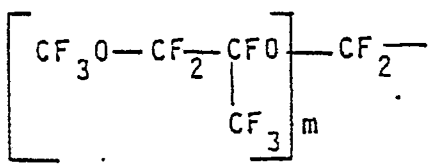

in which m is an integer from 0 to 5 inclusive, or a group

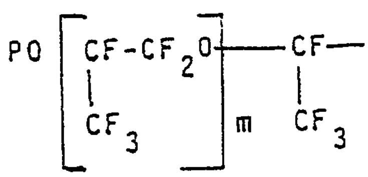

in which P is a perfluoroalkyl radical having 1 to 8 carbon atoms and m is as defined above;
B and T, which may be the same or different, are:
F, a perfluoroalkyl radical having 1 to 7 carbon atoms, or a group

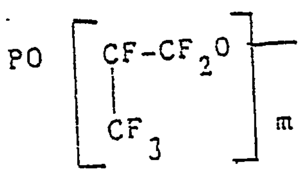

in which m and P are defined as above, X is equal to $-CF_2O-(CF_2O)_p-(C_2F_4O)_q-CF_2-$, in which p and q, which may be the same or different, are integers from 0 to 5 inclusive, and where the sum p+q is at least equal to 1, or a group $-(CF_2)_r-$, in which r is an integer from 1 to 8;
or an oxetane ring of the general formula selected from

(3) 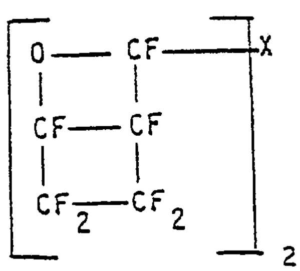 ; (4) 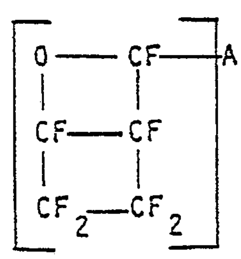 ;

in which the group linked to the ring contains at least one ethereal oxygen atom, and A and X being defined as bove;
A7) $(CD_2CF_2CF_2O)$, where D is H or F;
A8) $(CF_2CF_2O)$.

2. A process according to claim 1, characterized in that the perfluoropolyether is selected from those belonging to the following perfluoropolyether classes:
A1) $R_fO(C_3F_6O)_m(CFXO)_nR_f$, in which $R_f$ is $-CF_3$, $-C_2F_5$, $-C_3F_7$; X is $-F$, $-CF_3$; m and n are integers, and the m/n ratio ranges from 5 to 40 when n is different from 0;
A2) $C_3F_7O(C_3F_6O)_m-R_f$; where $R_f$ may be $-C_2F_5$, $-C_3F_7$, $-CFHCF_3$; and m is a positive integer;
A3) $CF_3O(C_3F_6O)_m(C_2F_4O)_n(CFXO)_q-CF_3$; where X is $-F$, $-CF_3$; m, n and q are integers, and n and q may also be 0; the ratio

$$\frac{m}{n+q}$$

ranges from 0 to 50, n/q ranges from 0 to 10, n+q and q respectively being different from 0;
A4) $CF_3O(C_2F_4O)_p(CF_2O)_q-CF_3$; where p and q are the same or different integers and which may also be 0, where the p/q ratio ranges from 0.5 to 1.5;

A5) $\left[C_3F_7O(C_3F_6O)_m-CF(CF_3)-\right]_2$ ; where m is a positive integer.

A6)

(1) 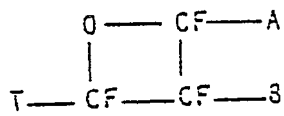 ; (2) 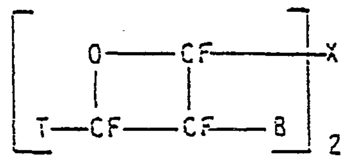 ;

(3) 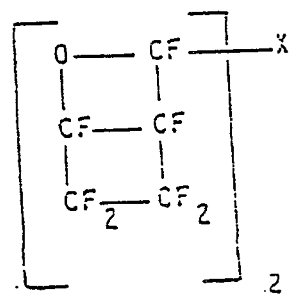 ; (4) 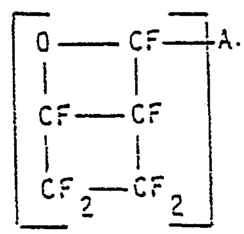 ;

where A, B, T and X are defined as in claim 1; and characterized in that at least one of the groups A, B and T in class 1), or B, T and X in class 2) contains one or more ethereal oxygen atoms, and in classes 3) and 4) the groups X and A are selected from the above-mentioned radicals containing ethereal oxygen atoms; and furthermore characterized in that, when one of the radicals B or T is equal to the group

$$RO\left[CF(CF_3)-CF_2O\right]_m-$$

the other radical is equal to F;
A7) $R_fO(CD_2CF_2CF_2O)_nR'_f$; where $R_f$ and $R'_f$, which may be the same or different, are fluorinated alkyl radicals; D is H or F, and n is a positive integer;
A8) $R_fO(CF_2CF_2O)_mR'_f$; where $R_f$ and $R'_f$, which may be the same or different, are $-CF_3$, $-C_2F_5$, and m is a positive integer.

3. The process according to claim 1, characterized in that the used perfluoropolyethers are represented by the following general formulae:
I) $RO-(C_3F_6O)_m(CFXO)_n-CFX-L$, or
II) $R''CFXO-(C_3F_6O)_x(CFXO)_y(C_2F_4O)_z-CFX-L$, where
$R = -CF_3, -C_2F_5, -C_3F_7$
$X = -F, -CF_3$

R″ = –F, $-CF_3$, $-C_2F_5$
m = an integer other than zero,
n = an integer or zero, and when n is different from zero m/n varies from 5 to 20 and R is preferably = $-CF_3$, if n = zero, R is preferably $-C_2F_5$ or $-C_3F_7$;
x = an integer or zero;
y, z = integers, and

$$\frac{x+z}{y}$$

ranges from 5 to 0.5, y being different from zero, provided that, when x = zero, z/y ranges from 1 to 0.5, while X is preferably –F, and R″ = L;
L = group Y–Z, where
Y = $-CH_2O-$, $-CH_2OCH_2-$, $-CF_2-$, $-CF_2O-$;
Z = a non-aromatic, non-fluorinated organic radical free from active hydrogen atoms, containing two or more identical or different heteroatoms, donors of electron doublets, or an aromatic radical, either or not containing heteroatoms, capable of forming coordinate bonds or charge-transfer bonds, thus causing various kinds of absorption phenomena on surfaces of metal, polymeric or ceramic materials.

4. The process according to claim 2, characterized in that there are used perfluoropolyethers of class A4) comprising, besides repeating units $C_2F_4O$ and $CF_2O$, also units $CF_2CF_2CF_2O$ and $CF_2CF_2CF_2CF_2O$.

5. The process according to claim 4, characterized in that there are used perfluoropolyethers prevailingly or only comprising unit $(CF_2)_3O$ or unit $(CF_2)_4O$.

**Patentansprüche**

1. Verfahren zum Schutz von Magnetbändern vor der durch metallische oder nicht-metallische Bestandteile, die die Kassette bilden, während des Betriebes der Bänder verursachten Reibung und Abnutzung, dadurch gekennzeichnet, daß die Bestandteile mit einem fließbaren Perfluorpolyether mit einer Viskosität im Bereich von 10 bis 1500 $mm^2/s$ (cSt) bei 20°C geschmiert werden und aus den Klassen von Verbindungen A1 bis A8 ausgewählt sind, die die Grundeinheiten der im folgenden aufgeführten Arten umfassen:
A1) $(C_3F_6O)$ und (CFXO), wobei X –F, $-CF_3$ ist und die Einheiten statistisch entlang der Perfluorpolyetherkette verteilt sind;
A2) $(C_3F_6O)$;
A3) $(C_3F_6O)$, $(C_2F_4O)$, (CFXO), worin X –F, $-CF_3$ ist und die Einheiten statistisch entlang der Perfluorpolyetherkette verteilt sind;
A4) $(C_2F_4O)$, $(CF_2O)$, die statistisch entlang der Perfluorpolyetherkette verteilt sind;
A5) $(C_3F_6O)$, wobei diese Klasse ferner die charakteristische Gruppe $-CF(CF_3)-CF(CF_3)-$ umfaßt;
A6) einen Oxetanring der allgemeinen Formel, ausgewählt aus

(1) 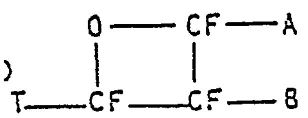 ; 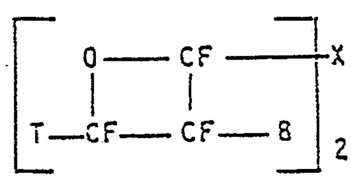 (2) ;

in welchem mindestens eine der an den Ring gebundenen Gruppen ein etherisches Sauerstoffatom enthält und in jedem Fall mindestens eine der Gruppen keine etherischen Sauerstoffatome enthält, und worin A F, ein Perfluoralkylrest mit 1 bis 8 Kohlenstoffatomen, eine Gruppe

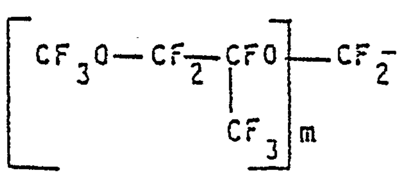

in welcher m eine ganze Zahl von 0 bis 5 einschließlich ist, oder eine Gruppe

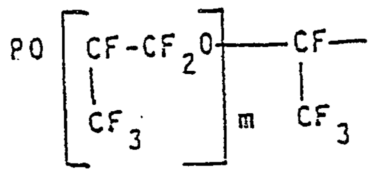

in welcher P ein Perfluoralkylrest mit 1 bis 8 Kohlenstoffatomen ist und m wie oben definiert ist, bedeutet,
B und T, die gleich oder verschieden sein können, bedeuten:
F, einen Perfluoralkylrest mit 1 bis 7 Kohlenstoffatomen, oder eine Gruppe

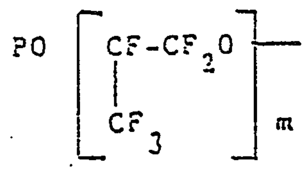

in welcher m und P wie oben definiert sind,
X ist $-CF_2O-(CF_2O)_p-(C_2F_4O)_q-CF_2-$ ist, worin p und q, die gleich oder verschieden sein können, ganze Zahlen von 0 bis 5 einschließlich sind, und worin die Summe p + q mindestens = 1 ist, oder eine Gruppe $-(CF_2)_r-$, in welcher r eine ganze Zahl von 1 bis 8 ist,
oder einen Oxetanring der allgemeinen Formel, ausgewählt aus

(3) 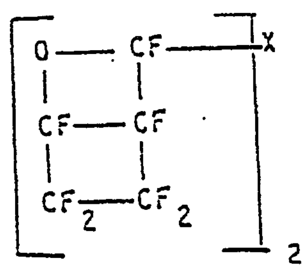 ; (4) 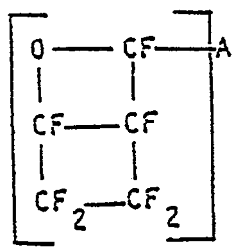 ;

in welchem die an den Ring gebundene Gruppe mindestens ein etherisches Sauerstoffatom enthält und A und X wie oben definiert sind,
A7) $(CD_2CF_2CF_2O)$, worin D = H oder F ist;
A8) $(CF_2CF_2O)$.

2. Verfahren nach Anspruch 1, dadurch gekennzeichnet, daß der Perfluorpolyether ausgewählt ist aus solchen, die zu den folgenden Perfluorpolyetherklassen gehören:
A1) $R_fO(C_3F_6O)_m(CFXO)_nR_f$, worin $R_f$ $-CF_3$, $-C_2F_5$, $-C_3F_7$ ist, X $-F$, $-CF_3$ ist, m und n ganze Zahlen sind und das Verhältnis m/n im Bereich von 5 bis 40 liegt, wenn n eine andere Bedeutung als 0 hat;
A2) $C_3F_7O(C_3F_6O)_m-R_f$, worin $R_f$ $-C_2F_5$, $-C_3F_7$, $-CFHCF_3$ sein kann und m eine positive ganze Zahl ist;
A3) $CF_3O(C_3F_6O)_m(C_2F_4O)_n(CFXO)_q-CF_3$, worin X $-F$, $-CF_3$ ist, m, n und q ganze Zahlen sind und n und q auch 0 sein können, das Verhältnis

$$\frac{m}{n+q}$$

im Bereich von 0 bis 50 liegt, n/q im Bereich von 0 bis 10 liegt, n+q jeweils von 0 verschieden sind;
A4) $CF_3O(C_2F_4O)_p(CF_2O)_q-CF_3$, worin p und q gleiche oder verschiedene ganze Zahlen sind und auch 0 bedeuten können, worin das Verhältnis p/q im Bereich von 0,5 bis 1,5 liegt;
A5) $[C_3F_7O(C_3F_6O)_m-CF(CF_3)-]_2$, worin m eine positive ganze Zahl ist,

A6)

(1) 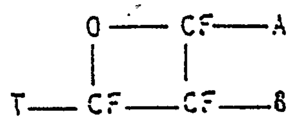 ; (2) 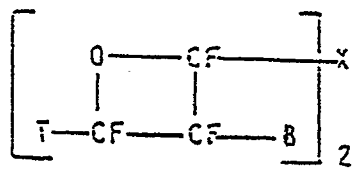 ;

(3) 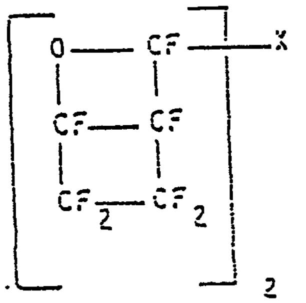 ; (4) 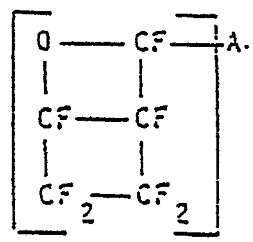 ;

worin A, B, T und X wie in Anspruch 1 definiert sind, und dadurch gekennzeichnet, daß mindestens eine der Gruppen A, B und T in Klasse 1) oder B, T und X in Klasse 2) ein oder mehrere etherische Sauerstoffatome enthält, und in Klassen 3) und 4) die Gruppen X und A ausgewählt sind aus den oben genannten, etherische Sauerstoffatome enthaltenden Resten und ferner dadurch gekennzeichnet, daß, wenn einer der Reste B oder T der Gruppe

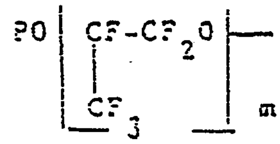

entspricht, der andere Rest = F ist;

A7) $R_fO(CD_2CF_2CF_2O)_nR'_f$, worin $R_f$ und $R'_f$, die gleich oder verschieden sein können, fluorierte Alkylreste bedeuten, D = H oder F ist und n eine positive ganze Zahl ist;

A8) $R_fO(CF_2CF_2O)_mR'_f$, worin $R_f$ und $R'_f$, die gleich oder verschieden sein können, $-CF_3$, $-C_2F_5$ sind und m eine positive ganze Zahl ist.

3. Verfahren nach Anspruch 1, dadurch gekennzeichnet, daß die verwendeten Perfluorpolyether durch die folgenden allgemeinen Formeln dargestellt werden:

I) $RO-(C_3F_6O)_m(CFXO)_n-CFX-L$ oder

II) $R''CFXO-(C_3F_6O)_x(CFXO)_y-(C_2F_4O)_z-CFX-L$, worin

$R = -CF_3, -C_2F_5, -C_3F_7$ ist,

$X = -F, -CF_3$ ist,

$R'' = -F, -CF_3, -C_2F_5$ ist,

m = eine ganze Zahl außer 0 ist

n = eine ganze Zahl oder 0 ist und, wenn n eine andere Bedeutung als 0 hat, variiert m/n von 5 bis 20 und ist R vorzugsweise $= -CF_3$, wenn n = 0 ist, ist R vorzugsweise $-C_2F_5$ oder $-C_3F_7$,

x = eine ganze Zahl oder 0 ist,

y, z = ganze Zahlen sind und

$$\frac{x + z}{y}$$

im Bereich von 5 bis 0,5 liegt, wenn y eine andere Bedeutung als 0 hat, mit der Maßgabe, daß, wenn x = 0 ist, z/y im Bereich von 1 bis 0,5 liegt, während X vorzugsweise –F und R″ = L ist,

L = die Gruppe Y–Z ist, wobei

$Y = -CH_2O-, -CH_2OCH_2-, -CF_2-, -CF_2O-$ ist,

Z = ein nicht-aromatischer, nicht-fluorierter organischer, von aktiven Wasserstoffatomen freier Rest mit 2 oder mehreren identischen oder unterschiedlichen Heteroatomen, Donatoren von Elektronenpaaren, oder ein aromatischer Rest ist, der gegebenenfalls Heteroatome enthält und zur Bildung von Koordinationsbindungen oder Charge-Transfer Bindungen befähigt ist und so auf den Oberflächen von Metall-, Polymer- oder Keramikmaterialien verschiedene Arten von Absorptionsphänomenen verursacht.

4. Verfahren nach Anspruch 2, dadurch gekennzeichnet, daß die verwendeten Perfluorpolyether

der Klasse A4) neben wiederkehrenden Einheiten $C_2F_4O$ und $CF_2O$ auch die Einheiten $CF_2CF_2CF_2O$ und $CF_2CF_2CF_2CF_2O$ umfassen.

5. Verfahren nach Anspruch 4, dadurch gekennzeichnet, daß die verwendeten Perfluorpolyether überwiegend oder ausschließlich die Einheit $(CF_2)_3O$ oder die Einheit $(CF_2)_4O$ umfassen.

**Revendications**

1. Un procédé de protection des bandes magnétiques du frottement et de l'usure résultant, au cours de leur fonctionnement, des éléments métalliques ou non métalliques qui constituent la cassette, caractérisé en ce que lesdits éléments sont lubrifiés à l'aide d'un fluide perfluoropolyéthéré ayant une viscosité de 10 à 500 $m^2/s$ (cSt) à 20°C et étant choisi parmi les classes suivantes des composés A1 à A8 comprenant les unités constitutives des types répertoriés ci-dessous:

A1) $(C_3F_6O)$ et $(CFXO)$ distribués, de façon statistique, le long de la chaîne perfluoropolyéther, dans laquelle X est $-F$, $-CF_3$;

A2) $(C_3F_6O)$;

A3) $(C_3F_6O)$, $(C_2F_4O)$, $(CFXO)$ distribués, de façon statistique, le long de la chaîne perfluoropolyéther, dans laquelle X est $-F$, $-CF_3$;

A4) $(C_2F_4O)$, $(CF_2O)$ distribués, de façon statistique, le long de la chaîne perfluoropolyéther;

A5) $(C_3F_6O)$, cette classe comprenant de plus le groupe caractéristique $-CF(CF_3)-CF(CF_3)-$;

A6) un cycle oxétane de formule générale choisie parmi:

(1) 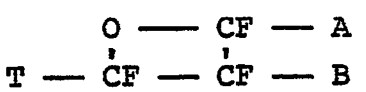 ; (2) 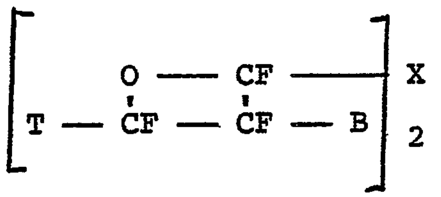 ;

dans laquelle au moins un des groupes liés au cycle contient un atome d'oxygène d'une fonction éther; et dans tous les cas, au moins un des groupes ne contient pas d'atome d'oxygène d'une fonction éther, et dans laquelle:

A est F, un radical perfluoroalkyle ayant de 1 à 8 atomes de carbone, un groupe

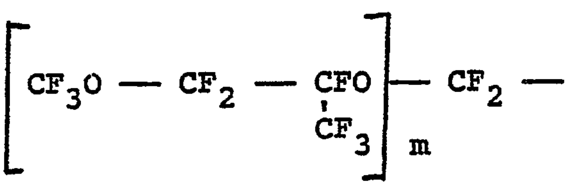

dans lequel m est un nombre entier de 0 à 5 inclus;

ou un groupe:

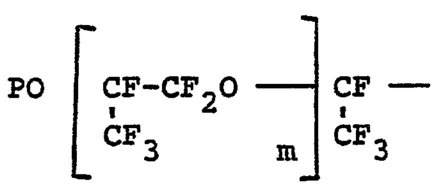

dans lequel P est un radical perfluoroalkyle ayant de 1 à 8 atomes de carbone et m est tel que défini ci-dessus;

B et T, qui peuvent être identiques ou différents, sont: F, un radical perfluoroalkyle ayant de 1 à 7 atomes de carbone, ou un groupe:

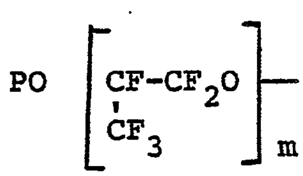

dans lequel m et P sont tels que définis ci-dessus,

X vaut $-CF_2O-(CF_2O)_p-(C_2F_4O)_q-CF_2-$, dans lequel p et q, qui peuvent être identiques ou différents, sont des entiers de 0 à 5 inclus, et dans lequel la somme p + q est au moins égale à 1, ou un groupe $-(CF_2)_r-$, dans lequel r est un entier de 1 à 8;

ou un cycle oxétane de formule générale choisie parmi:

(3) 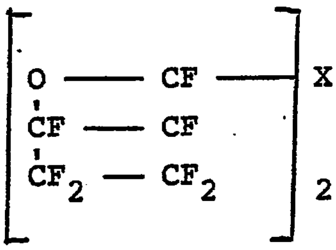 ; (4) 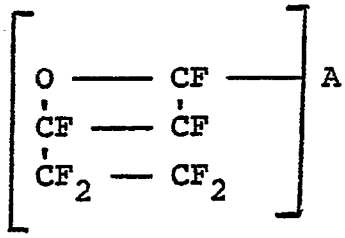 ;

dans laquelle le groupe lié au cycle contient au moins un atome d'oxygène d'une fonction éther, et A et X sont tels que définis ci-dessus;

A7) $(CD_2CF_2CF_2O)$, dans lequel D est H ou F;

A8) $(CF_2CF_2O)$.

2. Procédé selon la revendication 1, caractérisé en ce que le perfluoropolyéther est sélectionné parmi ceux appartenant aux classes de perfluoropolyéther suivantes:

A1) $R_fO(C_3F_6O)_m(CFXO)_nR_f$, dans lequel $R_f$ est $-CF_3$, $-C_2F_5$, $-C_3F_7$; X est $-F$, $-CF_3$; m et n sont des entiers, et le rapport m/n est compris entre 5 et 40 quand n est différent de zéro;

A2) $C_3F_7O(C_3F_6O_m-R_f$, dans lequel $R_f$ peut être $-C_2F_5$, $-C_3F_7$, $-CFHCF_3$; et m est un entier positif;

A3) $CF_3O(C_3F_6O)_m(C_2F_4O)_n(CFXO)_q-CF_3$, dans lequel X est $-F$, $-CF_3$; m, n et q sont des entiers, et n et q peuvent aussi valoir 0; le rapport m/n+q est de 0 à 50, le rapport n/q de 0 à 10, n+q et q étant respectivement différents de 0;

A4) $CF_3O(C_2F_4O)_p(CF_2O)_qCF_3$, dans lequel p et q sont des entiers identiques ou différents et qui peuvent aussi valoir zéro, dans lequel le rapport p/q est de 0,5 à 1,5;

A5) $[C_3F_7O(C_3F_6O)_m-CF(CF_3)-]_2$, dans lequel m est un entier positif;

A6)

(1) 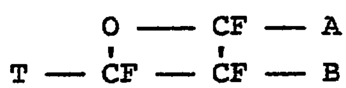 ; (2) 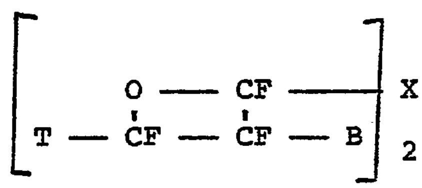 ;

(3) 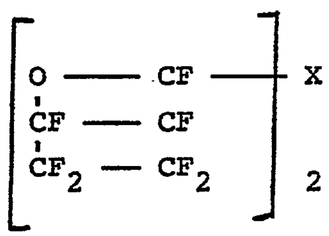 ; (4) 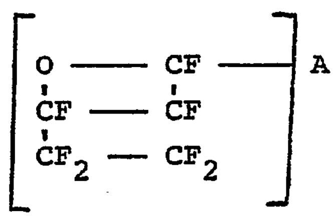 ;

dans lesquels A, B, T et X sont tels que définis dans la revendication 1;

et caractérisés en ce qu'au moins un des groupes A, B et T de la classe 1), ou B, T et X de la classe 2), contient un ou plusieurs atomes d'oxygène d'une fonction éther et que, dans les classes 3) et 4), les groupes X et A sont choisis parmi les radicaux mentionnés ci-dessus contenant des atomes d'oxygène d'une fonction éther; et de plus caractérisés en ce que, lorsque l'un des radicaux B ou T représente le groupe:

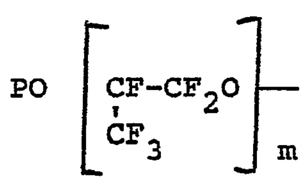

l'autre radical est F;

A7) $R_fO(CD_2CF_2CF_2O)_nR'_f$, dans lequel $R_f$ et $R'_f$, qui peuvent être identiques ou différents, sont des radicaux alkyles fluorés; D est H ou F, et n est un entier positif;

A8) $R_fO(CF_2CF_2O)_mR'_f$, dans lequel $R_f$ et $R'_f$, qui peuvent être identiques ou différents, sont $-C_3$, $-CF_2F_5$, et m est un entier positif.

3. Procédé selon la revendication 1, caractérisé en ce que les perfluoropolyéthers utilisés sont représentés par l'une des formules générales suivantes:

I) $RO-(C_3F_6O)_m(CFXO)_n-CFX-L$, ou

II) $R''CFXO-(C_3F_6O)_x(CFXO)_y-(C_2F_4O)_z-CFX-L$,

dans lesquelles:

$R = -CF_3, -C_2F_5, -C_3F_7$;

$X = -F, -CF_3$;

$R'' = -F, -CF_3, -C_2F_5$;

m = un entier différent de zéro;

n = un entier ou zéro;

et lorsque n est différent de zéro, le rapport m/n est de 5 à 20 et R est de préférence $-CF_3$, et si n = zéro, R est de préférence $-C_2F_5$ ou $-C_3F_7$;

x = un entier ou zéro;

y, z = des entiers; et

x+z/y est de 5 à 0,5, y étant différent de zéro, et lorsque x = zéro, z/y est de 1 à 0,5 tandis que X est de préférence –F, et R″ = L;

L = groupe Y–Z, dans lequel:

$Y = -CH_2O-, -CH_2OCH_2-, -CF_2-, -CF_2O-$;

Z = un radical organique non fluoré, non aromatique exempt d'hydrogène actif, contenant deux ou plusieurs hétéroatomes identiques ou différents, donneurs de doublets d'électrons, ou un radical aromatique, contenant ou non des hétéroatomes, capable de former des liaisons de coordination ou des liaisons datives, ceci induisant différents phénomènes d'absorption sur les surfaces métalliques, polymères ou des matériaux céramiques.

4. Procédé selon la revendication 2, caractérisé en ce que les perfluoropolyéthers de la classe A4) utilisés comprennent, outre les unités répétitives $C_2F_4O$ et $CF_2O$, aussi des unités $CF_2CF_2CF_2O$ et $CF_2CF_2CF_2CF_2O$.

5. Procédé selon la revendication 4, caractérisé en ce que les perfluoropolyéthers utilisés contiennent seulement ou principalement l'unité $(CF_2)_3O$ ou l'unité $(CF_2)_4O$.